(19) **Europäisches Patentamt**

**European Patent Office**

**Office européen des brevets**

(11) **EP 0 730 166 B1**

(12) **EUROPÄISCHE PATENTSCHRIFT**

(45) Veröffentlichungstag und Bekanntmachung des Hinweises auf die Patenterteilung:
**27.06.2001   Patentblatt 2001/26**

(51) Int Cl.⁷: **G01S 13/34**, G01S 13/42

(21) Anmeldenummer: **95103072.5**

(22) Anmeldetag: **03.03.1995**

(54) **Verfahren und Anordnung zur Verkehrserfassung mit einem Radargerät**

Method and device for measuring the traffic using a radar apparatus

Procédé et dispositif pour la mesure du trafic routier utilisant un appareil radar

(84) Benannte Vertragsstaaten:
**AT BE CH DE FR GB IT LI LU NL**

(43) Veröffentlichungstag der Anmeldung:
**04.09.1996   Patentblatt 1996/36**

(73) Patentinhaber: **SIEMENS AKTIENGESELLSCHAFT**
**80333 München (DE)**

(72) Erfinder: **v. Pieverling, Klaus, Dr. Ing.**
**D-81525 Wolfratshausen (DE)**

(56) Entgegenhaltungen:
**EP-A- 0 028 182**          **EP-A- 0 557 945**
**EP-A- 0 616 232**          **DE-A- 4 242 700**
**GB-A- 2 248 359**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Verkehrserfassung gemäß dem Oberbegriff des Anspruchs 1 und auf eine Anordnung zur Durchführung des Verfahrens gemäß dem Anspruch 3.

Verfahren mit Radargeräten zur Geschwindigkeitsmessung im Verkehrsbereich sind seit langem bekannt. Dabei wird der Radarstrahl in einem flachen Winkel gegen die Fahrbahn gerichtet, beispielsweise mit einem Radargerät, das auf einer Brükke über der Fahrbahn installiert ist. Ein den Strahl durchfahrendes Fahrzeug liefert ein Echo, dessen Frequenz gegenüber der Radarfrequenz auf Grund des Dopplereffektes proportional zur Radialgeschwindigkeit und damit zur Fahrzeuggeschwindigkeit verschoben ist. Derartige Radargeräte sind ohne großen Aufwand realisierbar, wobei in der Regel der Sender als Dauerstrichsender, d.h. als CW-Sender arbeitet. Mit solchen Radargeräten lassen sich problemlos Fahrzeuggeschwindigkeiten erfassen, wobei bezüglich der Obergrenze der Geschwindigkeit keine für den praktischen Einsatzfall störende Einschränkungen gegeben sind.

Diese Radargeräte weisen jedoch den prinzipiellen Nachteil auf, daß keine Entfernungsselektion erfolgt, d. h. es ist nicht möglich, zwei Fahrzeuge getrennt zu erfassen, die sich gleichzeitig im Radarstrahl befinden. Solche prinzipiellen Probleme treten z.B. bei Überwachung von Geschwindigkeitsübertretungen immer wieder auf. Auch ist es mit solchen einfachen Radargeräten nicht möglich, eine komplexere Verkehrslage zu erfassen.

Eine wesentliche Verbesserung dieses Nachteils läßt sich erreichen, wenn man durch eine zusätzliche Modulation dem Radargerät die Fähigkeit zu Entfernungsselektion bzw. -vermessung verleiht. Diese Modulation kann als Pulsmodulation, durch Frequenzumtastung oder durch lineare Frequenzmodulation erfolgen. Letzeres wird als FM-CW-Verfahren bezeichnet und ermöglicht eine besonders vorteilhafte Realisierung eines Radargerätes mit Entfernungsselektion für begrenzte Reichweiten von einigen hundert Metern. Die weiteren Ausführungen basieren auf dem FM-CW-Verfahren. Seine Wirkungsweise ist bereits in der EP 0 616 232-A2 beschrieben.

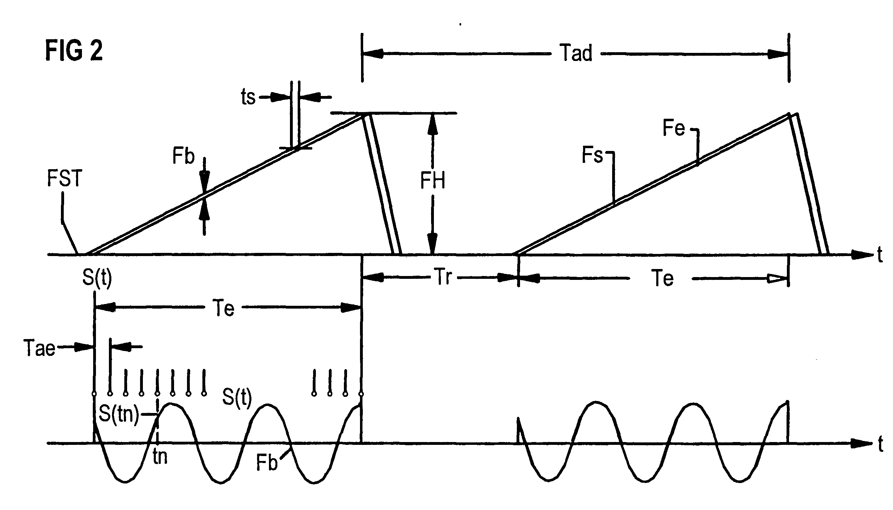

Mit Hilfe des FM-CW-Verfahrens läßt sich wie beim CW-Radargerät die Geschwindigkeit mit Hilfe des Dopplereffektes bestimmen. Vergleicht man die Dopplerfrequenzmessung eines CW-Radargerätes mit dem eines FM-CW-Radargerätes, so ist jedoch ein wesentlicher Unterschied gegeben. Beim CW-Radargerät steht ein lückenloses Signal zur Verfügung, bei einem FM-CW-Radargerät sind demgegenüber nur Abtastwerte verfügbar, dies ist z.B. in Figur 2 gezeigt. Gemäß der Figur 2 liefert jeder Frequenzsägezahn einen Abtastwert. Bei derartigen Abstraktionen entsteht stets das Problem der Vieldeutigkeit der Messung. Zur Vermeidung dieser Vieldeutigkeit muß die Abtastfrequenz (1/Tad) mindestens doppelt so groß sein, wie die höchste zu erwartende Dopplerfrequenzverschiebung (Abtasttheorem). Das damit verbundene Problem wird anhand eines praktischen Beispiels demonstriert, wobei zum besseren Verständnis die Ausführungen gemäß der EP 0 616 232-A2 herangezogen und auf das aktuelle Problem zugeschnitten werden.

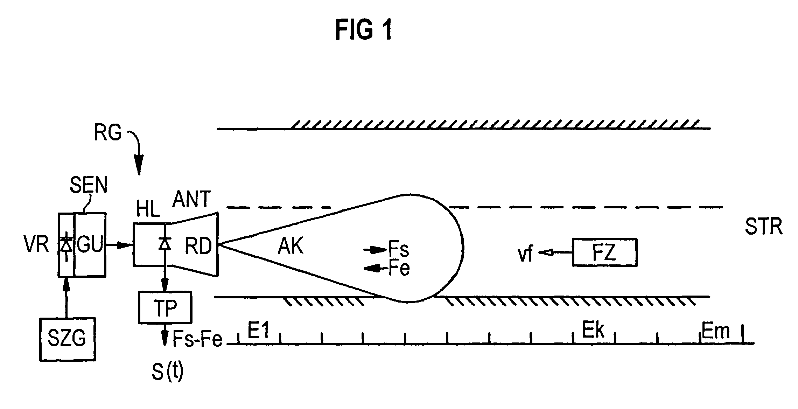

Das in der Figur 1 gezeigte Radargerät RG enthält als Sender SEN einen Gunnoszillator GU, dessen Frequenz über den Varaktor VR steuerbar ist. Als Steuersignal dient der Sägezahngenerator SZG. Das Ausgangssignal (Sende-Frequenz Fs) des Gunnoszillators GU läuft in einen Hohlleiter HL, an dessen Ende eine Antenne ANT angeschlossen ist. Die Antennenkeule AK beleuchet die vor dem Radargerät RG liegende Straße STR. Das hier befindliche Fahrzeug FZ reflektiert einen Teil dieser Mikrowellenenergie. Dieses Empfangssignal (Frequenz Fe) gelangt über die Antenne ANT zurück in den Hohlleiter HL und überlagert sich mit dem Sendesignal (Frequenz Fs). Die im Hohlleiter HL eingebaute Richtdiode RD richtet das Überlagerungssignal (Fs/Fe) gleich. Das hierbei entstehende Mischprodukt, gekennzeichnet durch die Frequenzdifferenz Fs-Fe wird über den Tiefpaß TP ausgefiltert und stellt das im folgenden weiter zu verarbeitende Radarsignal S(t) dar.

Der zeitliche Ablauf vom Sende- und Empfangssignal ist in Figur 2 gezeigt. Die Sendefrequenz Fs startet von der Startfrequenz FST aus und steigt mit seitlich linearem Anstieg im Zeitraum Te bis zu einem Maximalwert FST+FH, wobei FH der Frequenzhub ist. Mit Erreichen des Maximalwertes fällt die Frequenz Fs mit relativ steilem Abfall wieder auf den Ausgangswert FST zurück. Dieser Vorgang wiederholt sich nun in regelmäßigen Zeitabständen Tad.

Die Empfangsfrequenz Fe zeigt grundsätzlich den gleichen Zeitverlauf wie die Sendefrequenz Fs mit dem einzigen Unterschied, daß der Verlauf der Empfangsfrequenz Fe gegenüber der Sendefrequenz Fs zeitlich leicht verzögert ist und zwar um die Radarlaufzeit ts.

$$ts = 2 \cdot R/c \qquad\qquad (1)$$

mit R = Echoentfernung, c = Lichtgeschwindigkeit.

Es ist wichtig anzumerken, daß im Rahmen der hier betrachteten Echoentfernungen diese Laufzeit ts stets klein gegenüber der Empfangszeit Te ist. Im weiteren interessiert der Überlappungsbereich der beiden Sägezähne der Sendefrequenz Fs und der Empfangsfrequenz Fe im ansteigenden Bereich. Wegen des vergleichsweise kleinen Betrages der Laufzeit ts, kann dieser Überlappungsbereich dem Anstiegbereich Te der Sendefrequenz Fs gleichgesetzt werden.

Die kleine Zeitverschiebung ts ist zwar im Rahmen der Gesamtzeit Te vernachlässigbar, bewirkt jedoch auf Grund des hohen Frequenzhubes FH eine ausgeprägte Frequenzdifferenz Fb=Fs-Fe. Es gilt die Beziehung unter Verwendung von Gleichung (1):

$$\text{Frequenzdifferenz } Fb=Fs(t)-Fe(t)=H^{\cdot}ts/Te=2^{\cdot}R^{\cdot}H/(c^{\cdot}Te) \tag{2}.$$

Zum besseren Verständnis sind die verwendeten Parameter mit einem praktischen konkreten Datensatz beschrieben:

| | | | |
|-----|---------------------------------------------------------|---------------|
| FST | Startfrequenz | 24.1 GHZ |
| FH | Frequenzhub | 50 MHz |
| lr | (mittlere) Wellenlänge des Radargerätes (Frequenz FST+FH/2) | 1.243 cm |
| c | Lichtgeschwindigkeit | 300000 km/s |
| Te | Empfangszeit | 25.6 µs |
| Tae | Entfernungs-Abtastintervall | 400 ns |
| Tad | Sägezahnwiderholzeit | 45 µs |
| R | Echoentfernung | 50 m |
| ts | Signallaufzeit | 0.333 µs |
| Fb | Frequenzdifferenz | 651 kHz |

Allgemeiner formuliert ergibt sich für obige Parameter eine entfernungsproportionale Empfangs-Frequenzdifferenz

$$Fb=13,02 \text{ kHz/m} \tag{3}$$

Der zeitliche Verlauf S(t) der Empfangssignale mit der Frequenz Fd der Radarsignale, ist unterhalb des Sägezahns in Figur 2 als sich wiederholender Sinuszug dargestellt. Die Wellenlänge lr des Radargerätes (RG) spielt bei den Geschwindigkeitsbetrachtungen eine entscheidende Rolle. Die Frequenzverschiebung (Dopplerfrequenz) fd auf Grund des Dopplereffektes mit der Fahrzeuggeschwindigkeit vf, errechnet sich in bekannter Weise nach folgender Gleichung:

$$fd=2^{\cdot}vf/lr \tag{4}$$

Soll nun mit einem FM-CW-Radargerät mit obigen Parametern ein sehr hoher Geschwindigkeitsbereich von z.B. 250 km/h erfaßt werden, so muß demzufolge ein Meßzyklus mit einer Wiederholfrequenz von beispielsweise 22 kHz durchgeführt werden, d.h. in Zeitabständen (Sägezahn-Wiederholzeit) Tad von 45 µs, wie im Beispiel gemäß der Figur 2 gewählt. Diese Forderung stellt ein großes Problem dar, wenn man die Auswertealgorithmen des FM-CW-Radargerätes mit Hilfe eines Mikrorechners realisieren will. Nachteilig ist weiterhin die große Anzahl der Meßwerte, die beispielsweise mit Hilfe eines Fourier-Analysators (FFT) verarbeitet werden sollen, wenn man die Fahrzeuggeschwindigkeit genau bestimmen will, d.h. eine Dopplerfrequenzanalyse über einen längeren Zeitraum durchführen muß.

Aufgabe der Erfindung ist es daher, eine drastische Reduzierung dieses notwendigen Rechenaufwandes ohne jegliche Einbuße an Genauigkeit der Geschwindigkeitsmessung zu erreichen und dies in einem sehr hohen Fahrzeug-Geschwindigkeitsbereich (von 0 bis 250 km/h in beiden Richtungen).

Diese Aufgabe wird bezüglich des Verfahrens mit den Merkmalen des Anspruchs 1 und bezüglich der Anordnung mit den Merkmalen des Anspruchs 3 gelöst.

Anhand der weiteren Figuren der Zeichnung wird die Erfindung und deren Vorteile näher erläutert.

Dabei zeigen

Figur 1       ein Prinzipschaltbild eines Radargerätes,

Figur 2       Zeitdiagramme eines FM-CW-Radargerätes,

Figur 3        Zeitdiagramme des Empfangsechos eines bewegten Meßobjektes,

Figur 4        Zeitdiagramme des Sendesignals gemäß des erfindungsgemäßen Verfahrens mit einem FM-CW-Radargerät und

Figur 5        ein Blockschaltbild für die Signalauswertung gemäß dem erfindungsgemäßen Verfahren.

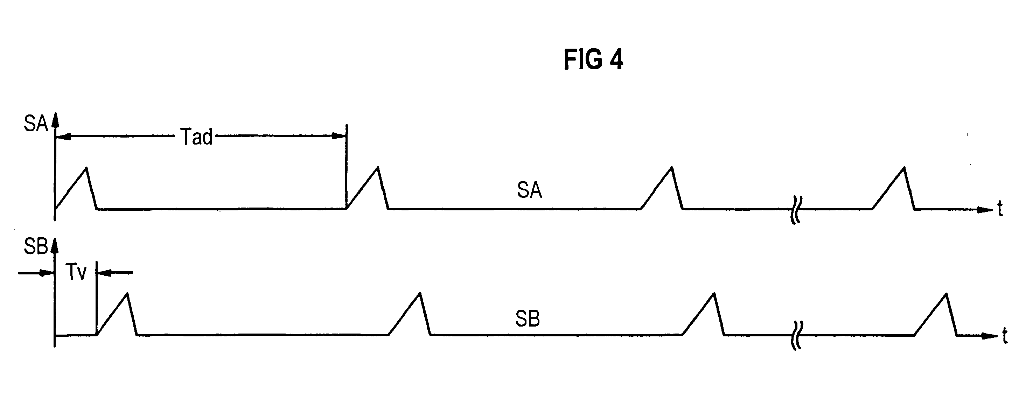

Der erste Schritt zur Reduzierung des Rechenaufwandes besteht erfindungsgemäß darin, daß man ohne Rücksicht auf die Forderung nach einer minimalen Abtastfrequenz ftm mit einer reduzierten Abtastfrequenz ft arbeitet, z.B. mit ft=2,2 kHz, siehe dazu Figur 4 oberes Zeitdiagramm mit Tad=450 µs.

Die erforderliche (minimale) Abtastfrequenz ftm errechnet sich nach folgender Gleichung: ftm=2·fdm=4·vfm/lr=22,2 kHz. Die reduzierte Abtastfrequenz ft beträgt beispielsweise ein Zehntel der minimalen Abtastfrequenz ftm.

Die Folge davon ist, daß nur ein Geschwindigkeitsbereich von +/- 25 km/h eindeutig erfaßt werden kann, daß also innerhalb des Geschwindigkeitsbereiches von 0 bis 250 km/h eine zehnfache Vieldeutigkeit besteht. Zur Beseitigung dieser Vieldeutigkeit folgt erfindungsgemäß ein zweiter Schritt. Dies ist in Figur 4 veranschaulicht, wobei die Lösung des Problems besteht darin, daß zwei Geschwindigkeitsmessungen mit der gleichen Abtastfrequenz ft=2,2 kHz (Wiederholdauer 450 µs) durchgeführt werden, dabei ist jedoch die zweite Messung um Tv=45 µs zeitlich gegen die erste Messung versetzt.

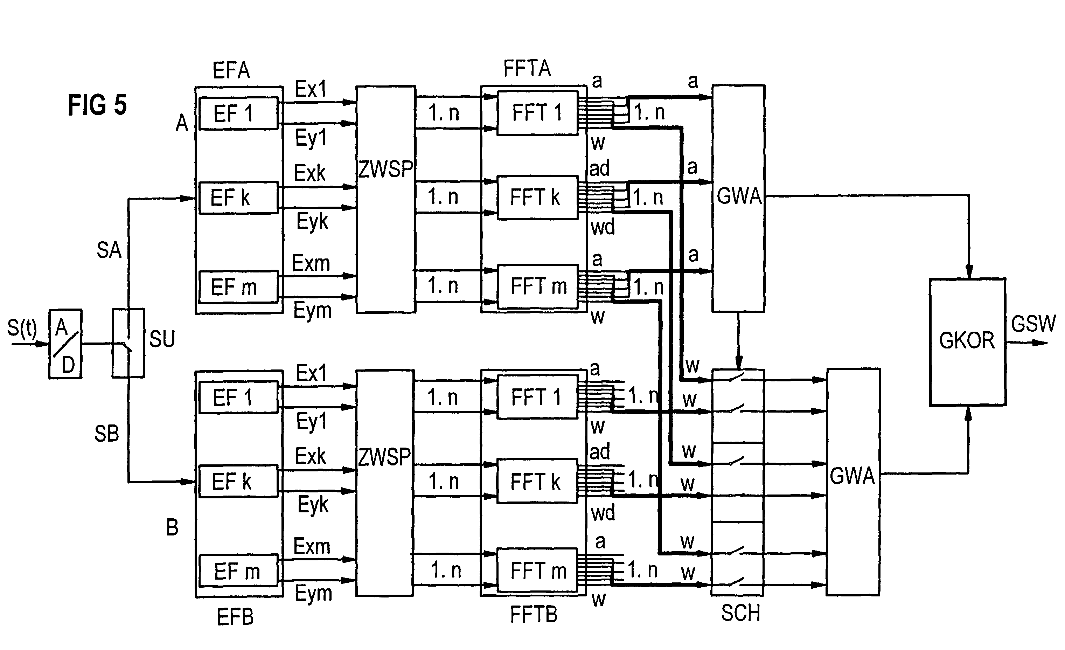

Im folgenden wird anhand der Figur 5 eine Anordnung zur Signalauswertung nach dem erfindungsgemäßen Verfahren beschrieben. Das Empfangssignal S(t) wird zunächst digitalisiert (Analog-Digital-Wandler A/D) und über einen Umschalter SU auf zwei Kanalzweige bzw. Datenverarbeitungssysteme A und B aufgeteilt, wobei dem System A die Empfangssignale der Sägezähne SA (Figur 4) und dem System B die Empfangssignale der Sägezähne SB zugeordnet sind. Die Signalauswertung enthält zwei für die beiden Systeme A und B gleich aufgebaute Entfernungsfilterbänke EFA, EFB mit nachgeschalteten Fourieranalysatoren FFTA und FFTB. Die Aufgabe dieser Anordnung besteht darin, die Echos der Fahrzeuge so aufzubereiten, daß am Ausgang des Geschwindigkeitskorrelators GKOR die Entfernung und die Geschwindigkeit (Geschwindigkeitswert GSW) der Fahrzeuge auf der Straße als eindeutige genaue Meßwerte erscheinen. Zum besseren Verständnis wird angenommen, daß auf der Straße STR ein einziges Fahrzeug FZ im Entfernungsbereich Ek mit der Geschwindigkeit vf fährt (Figur 1). Die weitere Beschreibung, die sich auf das Datenverarbeitungssystem A bezieht, gilt soweit nicht anderweitig erwähnt, uneingeschränkt auch für das System B.

Das in der zweiten Zeile der Figur 2 dargestellte Empfangssignal S(t) weist drei charakteristische Merkmale auf:

- Frequenz Fb charakterisiert durch den Abstand der Nulldurchgänge
- Amplitude = Höhe der Sinuskuppen
- Phase = Position der Nulldurchgänge.

Die Entfernungsfilterbank EFA besteht aus Bandpässen, deren Mittenfrequenzen aneinander anschließen und so dimensioniert sind, daß die vom interessierenden Entfernungsbereich Ei auf Grund der Gleichung (2) erzeugten Frequenzen Fb erfaßt werden. Das Empfangssignal S(t) eines bestimmten Entfernungsbereiches erscheint somit am Ausgang desjenigen Einzelfilters der Filterbank mit nennenswerter Amplitude, welches auf die zugehörige Frequenz Fb abgestimmt ist. Jedem Teilfilter der beispielsweise aus 32 Einzelfiltern bestehenden Filterbank läßt sich damit ein Entfernungsabschnitt auf der Straße zuordnen, wobei die absolute Entfernung durch die Mittenfrequenz des Filters und die Breite des Entfernungsabschnittes durch die Bandbreite des Filters gegeben ist. In Figur 1 ist schematisch der den jeweiligen Einzelfiltern EF1 bis EFn zugehörige Entfernungsabschnitt E1 bis Em skizziert.

Die Entfernungsfilter EF1 bis m sind in Digitaltechnik realisiert und führen jeweils einen zweifachen, an sich bekannten Rechenalgorithmus durch, wie er im folgenden nochmals aufgezeigt ist.

$$\text{Ex } k = \sum_{n=1}^{n=Ne} S(m) \cdot \cos(2 \cdot \pi \cdot k \cdot m) \cdot Tae \qquad (5a)$$

$$Ey \; k \; = \; \sum_{n=1}^{n=Ne} S(tn) \cdot \sin(2 \cdot \pi \cdot k \cdot tn) \cdot Tae \qquad (5b)$$

S(tn)     Empfangssignal
Tae     Abtastzeit des Signales S(t)
tn     Abtastzeitpunkte des Signales S(t)
k     Mittenfrequenz des Entfernungsfilters k
n=1...Ne     Abtastpunkte (Ne z.B. = 64).

Dieser als diskrete Fourieranalyse bekannter Algorithmus, wie er bereits auch in der EP 0 616 232-A2 erwähnt ist, liefert am Ausgang jedes Entfernungsfilters zwei Signalkomponenten x und y und erfaßt damit die drei Komponenten der Empfangssignale:

- Frequenz = Nummer des auf das Empfangssignal abgestimmten Entfernungsfilters (Fb proportional k)
- Amplitude und Phase werden repräsentiert durch die orthogonalen Komponenten Exk und Eyk des auf das Empfangssignal abgestimmten Filters.

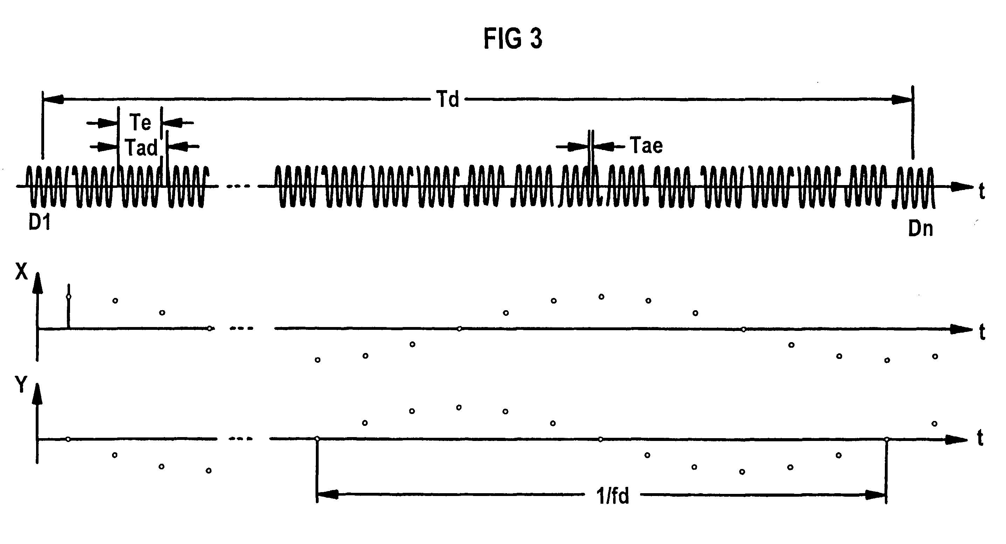

Betrachtet man das Entfernungsfilter EFk für sich, so erzeugt dieses aus Ne Abtastwerten zwei orthogonale Komponenten Exk, Eyk, deren Amplituden nur dann nennenswerte Größe annimmt, wenn die Eingangsfrequenz Fb des Signales S(t) im Bereich der Filterfrequenz k liegt. Das Fahrzeug FZ in Figur 1 wird im Teilfilter EFk der Filterbank EFA maximale Amplitude erzeugen. Die im weiteren beschriebene Dopplerfilterbank (FFT) führt eine Radialgeschwindigkeitsanalyse der Ausgangssignale der Entfernungsfilterbank durch. Zum besseren Verständnis des weiteren soll zunächst das Empfangssignal S(t) nocheinmal näher betrachtet werden, wobei das Hauptaugenmerk der Signalphase aufeinanderfolgender Sinuszüge gilt. In Figur 2 sind zwei aufeinanderfolgende Sinuszüge gezeichnet, die vom Echo eines feststehenden Objektes stammen. Man erkennt das Ziel mit Radialgeschwindigkeit Null daran, daß aufeinanderfolgende Sinuszüge absolut identisch erscheinen. Figur 3 zeigt im Gegensatz dazu eine größere Zahl aufeinanderfolgender Sinuszüge eines bewegten Objektes. Die einzelnen Sinuszüge werden in Zeitabständen Tad ermittelt (z. B. 45 μs, vergleiche Figur 2).

Während dieser kurzen Zeit bewegt sich das Objekt im Millimeterbereich. Diese winzige Ortsveränderung hat zwar vernachlässigbaren Einfluß auf die absolute Objektentfernung und damit auf die Frequenz Fb, jedoch erheblichen Einfluß auf die Phasendifferenz zwischen Sende- und Empfangssignal und damit auf die beim Überlagungsvorgang sich ergebende Phase des Signals S(t). Bei diesen Phasenänderungen muß die Ortsveränderung des Objekts in Relation zur Radarwellenlänge (lr) betrachtet werden. Beim genauen Betrachten der Figur 3 erkennt man die unterschiedliche Phasenlage der Sinuszüge.

In den beiden unteren Zeilen der Figur 3 sind die x- bzw. y-Komponenten des jedem Sinuszug zugeordneten Ausgangssignals eines Entfernungsfilters gezeichnet (Gleichung (5a)(5b)) für den Fall, daß die Signalfrequenz Fb im Durchlaßbereich des Filters liegt, d.h. nennenswerte Amplituden erzeugt. Man erkennt, wie sich mit der Phase die Werte der Komponenten x, y ändern. Die Wertepaare x, y aneinandergereiht, deuten jeweils eine um 90° versetzte Sinusfunktion an, deren Frequenz fd die Dopplerfrequenz und damit die Radialgeschwindigkeit des Meßobjektes repräsentiert.

Die Dopplerfrequenz errechnet sich nach der Gleichung (4) zum besseren Verständnis umgeformt zu

$$fd = VR/(lr/2) \qquad (4a)$$

fd    Dopplerfrequenz (Hz)
vr    Radialgeschwindigkeit des Meßobjekts in m/s
lr    Wellenlänge des Radargerätes in m

Gleichung (4a) läßt unter Betrachtung von Figur 3 sich wie folgt verständlich machen:

Der Reziprokwert der Dopplerfrequenz 1/fd gibt die Zeitdifferenz an, innerhalb welcher die Sinuslinien der beiden unteren Zeilen gerade eine volle Periode durchlaufen. In dieser gleichen Zeit hat sich auch die Phasenlage der Sinuszüge (oberste Zeile) um 360° verschoben. Verantwortlich für diese Phasenverschiebung ist eine leichte Veränderung des Abstandes zwischen Meßobjekt und Radargerät. Wenn sich das Meßobjekt um eine halbe Wellenlänge bewegt hat, so ändern sich sowohl der Hinweg, als auch der Rückweg des Mikrowellensignales um diesen Betrag, d. h. die gesamte Wegänderung entspricht dem zweifachen Betrag, also einer ganzen Wellenlänge. Die Phasenbeziehung zwischen Sende- und Empfangssignal ändert sich um einen äquivalenten Betrag, also um 360°. Mit anderen Worten kann somit die Dopplerfrequenz wie folgt definiert werden:

Die Dopplerfrequenz fd entspricht der Relativbewegung zwischen Radargerät und Meßobjekt, gemessen in Anzahl halber Radarwellenlängen pro Sekunde.

Es sei der Vollständigkeit halber erwähnt, daß sich natürlich die Frequenz Fb (Figur 2) durch die Radialgeschwindigkeit auf Grund des Dopplereffektes leicht verändert, wobei die Frequenz (verglichen mit einem stehenden Objekt) in Abhängigkeit vom Vorzeichen der Radialgeschwindigkeit steigt oder fällt. Diese Frequenzverschiebung ist jedoch vergleichsweise klein, so daß sie innerhalb eines Sinuszuges praktisch nicht erkennbar wird, sondern sich erst über mehrere Sinuszüge in der beschriebenen Weise auswirkt.

Mit einer zweiten, jedem Entfernungsfilter nachgeschalteten Filterbank, kann diese Dopplerfrequenz analysiert werden. Die Dopplerfilterbank sei im vorliegenden Beispiel durch einen FFT-Analysator (Fast-Fourier-Analysator) realisiert. Der FFT-Algorithmus ist aus der einschlägigen Literatur bekannt. Der im vorliegenden Beispiel verwendete FFT-Algorithmus erzeugt aus n=256 zeitlichen Abtastwertepaaren x(t), y(t) n=256 Spektralwertepaare xd(fd), yd(fd).

Als zeitliche Abtastwerte dienen die in den beiden unteren Zeilen der Figur 3 gezeigten Wertepaare x, y. Das Abtastzeitintervall entspricht der Zeit Tad (Figur 4). Zur Realisierung der FFT-Analyse werden im Zwischenspeicher ZWSP jeweils 256 Wertepaare x, y (vergleiche Figur 4) zwischengespeichert, es werden also sämtliche Ausgangssignale über den Zeitraum n·Tad=Td zwischengespeichert. Dieser Zeitraum Td ist damit die Gesamtanalysezeit, die für Ermittlung von Entfernung und Geschwindigkeit aller interessierender Meßobjekte benötigt wird. Die Ausgangswerte der FFT-Analysatoren geben die Spektralkomponenten an, welche in der durch die n Abtastwertepaare x(t), y(t) gegebene Zeitfunktionen vorhanden sind.

Betrachtet man die bisher beschriebene Auswertung, so erkennt man, daß sich das Empfangssignal S(t) matrixartig verzweigt, nämlich durch die Entfernungsfilterbank (z.B. in 32 Zweige) und dann pro Entfernungsfilter in jeweils n (z.B. 256) Zweige durch den jeweils nachgeschalteten FFT-Analysator.

Wichtig ist nun die Tatsache, daß in den 32·256 Ausgangskanälen nur in solchen Ausgangskanälen nennenswerte Amplituden vorhanden sind, deren Filterfrequenz mit der Frequenz des Eingangssignales übereinstimmt. So kann in Figur 5 nur in der Dopplerfilterbank EFk eine nennenswerte Amplitude erscheinen, auf Grund des Echosignals des Fahrzeugs FZ (Figur 1). Im Bereich der 256 Ausgangskanäle der Dopplerfilterbank EFk wiederum wird nur der einzige Ausgang eine nennenswerte Amplitude liefern, der mit der Dopplerfrequenz des Fahrzeugs FZ übereinstimmt. Jeder Ausgangskanal ist durch zwei orthogonale Komponenten repräsentiert, in Figur 5 sind anstelle der karthesischen Komponenten x, y die Polarkomponenten Amplitude a und Phasenwinkel w dargestellt.

Zur Weiterverarbeitung der Signale der FFT-Analysatoren ist also eine Amplitudenanalyse erforderlich, welche nur solche Signale weiterleitet, deren Amplitude nennenswert ist. Diese Amplitudenanalyse erfolgt in der Geschwindigkeits-Amplituden-Auswertung GAA. Konzentriert man sich auf das einzig vorhandene Fahrzeug FZ, so genügt es, nur den Kanal mit maximaler Amplitude zu bearbeiten.

Die Geschwindigkeitsmessung mit Hilfe der FFT-Analyse erfolgt über einen Zeitraum von n·Tad=256·450 µs=115ms. Dieser lange Zeitraum ermöglicht eine extrem genaue Geschwindigkeitsbestimmung im Bereich von Bruchteilen von Stundenkilometern. Zunächst werden die Meßergebnisse der zwei Datenverarbeitungssysteme für sich betrachtet. Es ist einzusehen, daß jede der beiden im Abstand von Tv=45 µs hintereinander durchgeführten Messungen in den Systemen A und B praktisch zum gleichen Resultat führen: Im Entfernungsbereich Ek fährt ein Fahrzeug mit zehn möglichen Geschwindigkeiten im Bereich 250 km/h. Entscheidend für die Beseitigung dieser Geschwindigkeitsvieldeutigkeit ist nun eine Verknüpfung der beiden Meßergebnisse, wobei der Phasenwinkel eine entscheidende Rolle spielt.

Jede Fourieranalyse liefert grundsätzlich als Ergebnis einen Vektor, gekennzeichnet durch zwei orthogonale Komponenten x, y (vergleiche Figur 5) oder gekennzeichnet durch Amplitude a und Phasenwinkel w. Im allgemeinen ist dabei der Amplitudenwert von überwiegendem Interesse, da der Phasenwert einer Einzelmessung einen völlig willkürlichen Wert darstellt, abhängig vom zufällen Beginnzeitpunkt des jeweiligen Analysevorgangs. Diese Tatsache gilt natürlich auch für eine getrennte Betrachtung der oben beschriebenen, kurz hintereinander durchgeführten Fourieranalysen für die Systeme A und B. Wesentlich ist nun ein Vergleich der beiden Phasenwinkel, d.h. die Phasenwinkeldifferenz der beiden Fourieranalysen. Sie stellt nämlich ebenfalls ein Maß für die Geschwindigkeit des Fahrzeugs dar. Diese Tatsache soll durch die weiteren Überlegungen veranschaulicht werden.

Zunächst sei angenommen, daß ein stehendes Fahrzeug vermessen wird. Die Fourieranalyse liefert als Ergebnis die Geschwindigkeit Null mit einer Vieldeutigkeit von +/- 25 km/h. Die Phasenwinkeldifferenz ist Null, denn die Phasenwinkel aller Messungen sind identisch (Figur 2).

Betrachtet man nun bewegte Fahrzeuge, so stellt sich eine von Null verschiedene Phasendifferenz ein, wobei der Wert der Phasendifferenz zwischen den Systemen A und B proportional mit der Geschwindigkeit ansteigt. Das Vorzeichen der Phasenwinkeldifferenz gibt die Richtung der Geschwindigkeit an. Die Größe der Phasendifferenz hängt vom Zeitabstand Tv der beiden Messungen (Sägezahnperiode SA und SB in Figur 4) und der Wellenlänge lr des Radargerätes ab, wobei folgende Überlegung gilt:

Wenn sich zwei Meßpunkten das Fahrzeug um eine halbe Wellenlänge auf das Radargerät zu- oder vom Radargerät wegbewegt, hat sich die Radarmeßentfernung (Hin- und Rückweg) um den doppelten Betrag, also um eine ganze Wellenlänge verschoben. Diese Verschiebung bewirkt eine Phasenänderung um 360°, also eine Änderung in dem gesamten eindeutig erfaßbaren Phasenwinkel.

Nimmt man eine Geschwindigkeit von 250 km/h (69,4 m/s) an, und einen Zeitunterschied (Tv) der beiden Fourieranalysen von 45 µs, so entsteht ein Wegunterschied (Hin- und Rückweg) von ds=2·69,4·45·10e-6=0,06246m=lr/2, also der halben Wellenlänge, verbunden mit einer Phasendifferenz von 180°. Berücksichtigt man die Richtung der Geschwindigkeit, so ergibt sich ein Phasenwinkelbereich von +/- 180°, also ein Bereich vom gesamten eindeutigen Phasenbereich 360°.

Die Phasenwinkeldifferenz der beiden Fourieranalysen ist also ein Maß für die Geschwindigkeit des Fahrzeuges nach Größe und Richtung mit einem maximalen Entfernungsbereich von 250 km/h, wobei 250 km/h eine Phasenwinkeldifferenz von 180° bewirkt. Die Signalwinkeldifferenz wird in der Geschwindigkeits-Winkelanalyseeinrichtung GWA durchgeführt.

Somit stehen zwei Meßergebnisse zur Verfügung:

- Extrem genauer Meßwert auf Grund der Amplitudenauswertung der beiden Fourieranalysen, jedoch mit einer Vieldeutigkeit von 25 km/h,

- ein Geschwindigkeitswert, basierend auf der Phasenwinkeldifferenz mit einem eindeutigen Meßbereich von 250 km/h.

Diese Meßergebnisse lassen sich nun verknüpfen (Geschwindigkeitskorrelator GKORR), wodurch sich für das Fahrzeug FZ in der Entfernung Ek ein eindeutiger Geschwindigkeitswert GSW hoher Genauigkeit ergibt. Die zu fordernde Genauigkeit der als Grobmessung fungierenden Phasendifferenzmessung beträgt dabei 25 km/h, muß also besser als 10% bezogen auf den gesamten Meßbereich sein.

Figur 3 zeigt noch Einzelheiten des Funktionsablaufes, welche im weiteren behandelt werden sollen:

Die Bestimmung der Filternummer mit maximaler Amplitude wird zweckmäßigerweise für die Winkeldifferenzberechnung nur in einem Fourieranalysensystem A in Figur 5 durchgeführt und im zweiten System B nur der Signalwinkel mit der entsprechenden Filternummer berechnet. Diese Methode ist insofern von Bedeutung, als eine getrennte Maximalwertbestimmung in den beiden Analysensystemen zu unterschiedlichen Filternummern führen kann, etwa bei zwei benachbarten Frequenzkanälen mit annähernd gleicher Amplitude, was für die Winkelberechnung unzulässig ist. Die Amplituden-Maximumbestimmung im System A steuert die Schaltmatrix SCH, welche in beiden Systemen A und B den für die Winkelberechnung geeigneten Kanal auswählen und zur Geschwindigkeits-Winkelverarbeitung GWA weiterleitet.

Zieht man nun Bilanz bezüglich des Rechenaufwandes, so ergibt sich bei einem Analysezeitraum von 115 ms (9 Hz = 0,2 km/h Dopplerfrequenzauflösung gemäß Gleichung (4)) folgender Vergleich:

Abtastpunkte bei eindeutiger Analyse mit 22 kHz: 2560

Abtastpunkte bei erfindungsgemäßer Doppleranalyse mit 2,2 Hz: 2·256.

Man erreicht damit in äußerst vorteilhafter Weise eine Entlastung des Rechenaufwandes um den Faktor 5.

Als vieldeutiger Feinwert genügt im allgemeinen die Verwendung eines der beiden Fourieramplitudenergebnisse. Bei besonders hohen Genauigkeitsansprüchen ist eine Verbesserung des Ergebnisses dadurch möglich, daß man einen Amplitudenvergeich zwischen dem Geschwindigkeitskanal mit maximaler Amplitude und dem Nachbarkanal mit zweitgrößter Amplitude durchführt (Interpolation). Weiterhin kann dieser Interpolationsvorgang bei den beiden Fourieranalysen durchgeführt und gemittelt werden.

Bezugszeichenliste

RG =          Radargerät
SEN =         Sender
GU =          Gunnoszillator
VR =          Varaktor-Diode
SZG =         Sägezahn-Generator
Fs =          Sende-Signal (-Frequenz)
Fe =          Empfangs-Signal (-Frequenz)
Fs/Fe =       Überlagerungssignal
vf =          Fahrzeuggeschwindigkeit (maximal 250 km/h)

| | |
|---|---|
| HL = | Hohlleiter |
| ANT = | Radar-Antenne |
| AK = | Antennenkeule |
| FZ = | Fahrzeug |
| STR = | Straße (Fahrbahn) |
| RD = | Gleichrichter-Diode |
| TP = | Tiefpaß |
| Fb = | Frequenzdifferenz: Fs-Fe |
| S(t) = | Radar-Signal |
| E1...Em = | Entfernungsabschnitte |
| EST = | Startfrequenz |
| Te = | Empfangszeit |
| Tr = | Rücklaufzeit |
| Tad = | Sägezahn-Wiederholzeit (z.B. 45 µs) |
| ts = | Radar-Laufzeit (Signal-Laufzeit) |
| FH = | Frequenzhub |
| FST+FH = | Maximalwert |
| lr = | Wellenlänge des Radargerätes |
| Tae = | Entfernungs-Abtastintervall (z.B. 400 ns) |
| R = | Echoentfernung |
| fd = | Frequenzverschiebung (Dopplerfrequenz) |
| Td = | Gesamtanalysezeit |
| Tv = | Zeitversatz (Zeitabstand, z.B. 45 µs) |
| A/D = | Analog-Digital-Wandler |
| SU = | Umschalter |
| SA = | erster (Radar-) Meßwert |
| SB = | zweiter Radar-) Meßwert |
| A;B = | Datenverarbeitungs-Systeme (Kanal A, Kanal B) |
| EFA,EFB = | Entfernungsfilterbank |
| ZWSP = | Zwischenspeicher |
| FFTA;FFTB = | Fourieranalysator |
| GAA = | Geschwindigkeitsamplitudenauswertung |
| SCH = | Schaltmatrix |
| GWA = | Geschwindigkeitswinkelanalyseeinrichtung |
| GKOR = | Geschwindigkeitskorrelator |
| GSW = | Geschwindigkeitswert |
| ft = | reduzierte Abtastfrequenz (z.B. 2,2 kHz=450µs) |
| ftm = | minimale Abtastfrequenz (z.B. 22 kHz) |

**Patentansprüche**

1. Verfahren zur Verkehrserfassung mit einem Radargerät (RG), welches mit einer Radarantenne (ANT) eine bestimmte Verkehrsfläche (STR) ausleuchtet und nach dem FM-CW-Prinzip arbeitet und sowohl eine Geschwindigkeitsmessung (vf), als auch eine Entfernungsselektion (Ek) gestattet,
   **dadurch gekennzeichnet,**

   - daß mit einer Abtastfrequenz (ft) gearbeitet wird, die gegenüber der normalerweise zur Vermeidung der Vieldeutigkeit erforderlichen Abtastfrequenz (ftm) reduziert ist,
   - daß mit dieser Abtastfrequenz (ft) zwei Geschwindigkeitsmessungen (SA/SB) kurz nacheinander durchgeführt werden, wobei die zweite Messung (SB) um einen bestimmten zeitlichen Betrag (tv) gegenüber der ersten Messung (SA) versetzt ist,
   - daß von beiden Abtastwertpaketen (SA/SB) in einem jeweiligen Datenverarbeitungssystem (A/B) eine Fourieranalyse (FFTA/FFTB) durchgeführt wird, wobei die Phasenwinkeldifferenz der beiden Abtastpakete einen groben, im interessierenden Geschwindigkeitsbereich eindeutigen Meßwert liefert, welcher mit den vieldeutigen Meßwerten eines einzelnen Abtastpaketes verknüpft (GKOR) wird, um den genauen eindeutigen Geschwindigkeitswert (GSW) zu bestimmen.

**2.** Verfahren nach Anspruch 1,
**dadurch gekennzeichnet,** daß der Zeitversatz (Tv) in Abhängigkeit von den Parametern des Radargerätes und dem zu messenden Höchstgeschwindigkeitsbereich gewählt ist.

**3.** Anordnung zur Durchführung des Verfahrens nach Anspruch 1 oder 2,
**dadurch gekennzeichnet,**

daß das Radargerät (RG) an einen Analog-Digital-Wandler (A/D) angeschlossen ist, wodurch die Radarsignale (S(t)) dem Analog-Digital-Wandler (A/D) zuführbar sind,
daß ein erstes Verarbeitungssystem (A) und ein zweites Verarbeitungssystem (B) an den Ausgang des Analog-Digital-Wandlers (A/D) angeschlossen sind, wodurch die digitalisierten Signale der ersten Messung (SA) einem ersten Verarbeitungssystem (A) und der zweiten Messung (SB) einem zweiten Verarbeitungssystem (B) zuführbar sind,
daß jedes Verarbeitungssystem (A,B)

- eine Entfernungsfilterbank (EFA/EFB) aus Bandpässen, deren Mittenfrequenzen aneinander anschließen,
- einen Zwischenspeicher (ZWSP) und
- einen nachgeordneten Fourier-Analysator (FFTA/FFTB) aufweist,

daß eine Geschwindigkeitsamplitudenauswertung (GAA) an den Ausgang des Fourier-Analysators (FFTA) angeschlossen ist, wodurch die am Ausgang des ersten Verarbeitungssystems (A) anstehenden Amplitudenwerte (a) der Geschwindigkeitsamplitudenauswertung (GAA) zuführbar sind, die Mittel zur Erzeugung eines den maximalen Amplitudenwerten (a) entsprechenden Ausgangssignals der Geschwindigkeitsamplitudenauswertung aufweist,
daß die Fourier-Analysatoren (FFTA/FFTB) beider Verarbeitungssysteme (A, B) über eine von der Geschwindigkeitsamplitudenauswertung (GAA) gesteuerte Schaltmatrix (SCH) an eine Geschwindigkeitswinkelanalyseeinrichtung (GWA) angeschlossen sind, wodurch die am Ausgang der Fourier-Analysatoren (FFTA/FFTB) beider Verarbeitungssysteme (A, B) anstehenden Winkelwerte (w) der Geschwindigkeitswinkelanalyseeinrichtung (GWA) zuführbar sind, die Mittel zur Erzeugung eines einer Phasenwinkeldifferenz der beiden Winkelwerte (w) entsprechenden Ausgangssignals der Geschwindigkeitswinkelanalyseeinrichtung (GWA) aufweist und
daß die Ausgänge der Geschwindigkeitsamplitudenauswertung (GAA) und der Geschwindigkeitswinkelanalyseeinrichtung an einen Geschwindigkeitskorrelator angeschlossen sind, wodurch die Ausgangssignale der Geschwindigkeitsamplitudenauswertung (GAA) und die Ausgangssignale der Geschwindigkeitswinkelanalyseeinrichtung (GWA) dem Geschwindigkeitskorrelator (GKOR) zuführbar sind, der Mittel zur Verknüpfung der Phasenwinkeldifferenz mit dem maximalen Amplitudenwert (a) zu einem Ausgangssignal des Geschwindigkeitskorrelators (GKOR) aufweist, wobei das Ausgangssignal des Geschwindigkeitskorrelators (GKOR) den Geschwindigkeitswert (GSW) des gemessenen Fahrzeugs (FZ) angibt.

**Claims**

**1.** Method for measuring traffic with the aid of a radar set (RG) which uses a radar antenna (ANT) to illuminate a specific traffic surface (STR) and operates according to the FM-CW principle and permits both speed measurement (vf) and range selection (Ek),
characterized in that,

- during operation use is made of a sampling rate (ft) which is reduced by comparison with the sampling rate (ftm) normally required for avoiding ambiguity,
- in that two speed measurements (SA/SB) are carried out shortly one after another at this sampling rate (ft), the second measurement (SB) being offset by a specific temporal amount (tv) with respect to the first measurement (SA), and
- in that a Fourier analysis (FFTA/FFTB) of both sample packets (SA/SB) in a respective data processing system (A/B) is carried out, the phase angle difference between the two sample packets supplying a coarse measured value which is unambiguous in the speed range of interest and is combined with the exact ambiguous measured values of a single sample packet (GKOR), in order to determine the exact unambiguous speed value (GSW).

2. Method according to Claim 1, characterized in that the time offset (Tv) is selected as a function of the parameters of the radar set and of the maximum speed range to be measured.

3. Arrangement for carrying out the method according to Claim 1 or 2, characterized in that the radar set (RG) is connected to an analogue-to-digital converter (A/D), as a result of which the radar signals (S(t)) can be fed to the analogue-to-digital converter (A/D),

   in that a first processing system (A) and a second processing system (B) are connected to the output of the analogue-to-digital converter (A/D), as a result of which the digitized signals of the first measurement (SA) can be fed to a first processing system (A), and of the second measurement (SB) can be fed to a second processing system (B),
   in that each processing system (A, B) has

   - a range filter bank (EFA/EFB) composed of bandpass filters whose centre frequencies adjoin one another,
   - a buffer (ZWSP), and
   - a downstream Fourier analyser (FFTA/FFTB),

   in that a velocity amplitude evaluation unit (GAA) is connected to the output of the Fourier analyser (FFTA), as a result of which the amplitude values (a) present at the output of the first processing system (A) can be fed to the velocity amplitude evaluation unit (GAA), which has means for generating an output signal of the velocity amplitude evaluation unit corresponding to the maximum amplitude values (a),
   in that the Fourier analysers (FFTA/FFTB) of the two processing systems (A, B) are connected to a velocity angle analysing device (GWA) via a switching matrix (SCH) controlled by the velocity amplitude evaluation unit (GAA), as a result of which the angle values (w) present at the output of the Fourier analysers (FFTA/FFTB) of the two processing systems (A, B) can be fed to the velocity angle analysing device, which has means for generating an output signal of the velocity angle analysing device (GWA) corresponding to a phase angle difference between the two angle values (w), and
   in that the outputs of the velocity amplitude evaluation unit (GAA) and of the velocity angle analysing device are connected to a velocity correlator, as a result of which the output signals of the velocity amplitude evaluation unit (GAA) and the output signals of the velocity angle analysing device (GWA) can be fed to the velocity correlator (GKOR), which has means for combining the phase angle difference with the maximum amplitude value (a) to form an output signal of the velocity correlator (GKOR), the output signal of the velocity correlator (GKOR) specifying the velocity value (GSW) of the measured vehicle (FZ).

## Revendications

1. Procédé de détection du trafic par un appareil (RG) radar dont une antenne (ANT) radar couvre une surface (SPR) de trafic déterminé et fonctionne suivant le principe FM-CW et qui permet à la fois une mesure (vf) de vitesse et une sélection (Ek) d'éloignement,
      caractérisé en ce que

   - on travaille à une fréquence (ft) d'échantillonnage, qui est réduite par rapport à la fréquence (ftm) d'échantillonnage normalement nécessaire pour empêcher toute ambiguïté,
   - on effectue à cette fréquence (ft) d'échantillonnage deux mesures (SA/SB) de vitesse peu de temps l'une après l'autre, la deuxième mesure (SB) étant décalée d'une valeur (tv) temporelle déterminée par rapport à la première mesure (SA),
   - on effectue à partir des deux paquets (SA/SB) de valeurs d'échantillonnage, dans un système (A/B) respectif de traitement de données, une analyse (FFTA/FFTB) de Fourier, la différence d'angle de phase des deux paquets d'échantillonnage fournissant une valeur de mesure grossière, non équivoque dans l'intervalle de vitesse intéressant, cette valeur de mesure étant combinée (GKOR) aux valeurs de mesures ambiguës d'un paquet d'échantillonnage individuel afin de déterminer la valeur (GSW) de vitesse exacte non équivoque.

2. Procédé suivant la revendication 1, caractérisé en ce que le décalage (Tv) de temps est choisi en fonction des paramètres de l'appareil radar et de l'intervalle de très grande vitesse à mesurer.

3. Dispositif pour la mise en oeuvre du procédé suivant la revendication 1, caractérisé en ce que

l'appareil (RG) radar est raccordé à un convertisseur (A/D) analogique-numérique, ce qui fait que les signaux (S(t)) du radar peuvent être envoyés au convertisseur (A/D) analogique-numérique,

- un premier système (A) de traitement et un deuxième système (B) de traitement sont raccordés à la sortie du convertisseur (A/D) analogique-numérique, ce qui fait que les signaux numérisés de la première mesure (SA) peuvent être envoyés à un premier système (A) de traitement et que les signaux numérisés de la deuxième mesure (SB) peuvent être envoyés à un deuxième système (B) de traitement,
  en ce que chaque système (A, B) de traitement comporte
- un banc (EFA/EFB) de filtre d'éloignement constitué de passe-bande dont les fréquences moyennes se suivent les unes les autres,
- une mémoire (SWSP) intermédiaire et
- un analyseur (FFTA/FFTB) de Fourier en aval,

un dispositif (GAA) d'exploitation d'amplitude et de vitesse est raccordé à la sortie de l'analyseur (FFTA) de Fourier, les valeurs (A) d'amplitude se trouvant à la sortie du premier système (a) de traitement pouvant être envoyées au dispositif (GAA) d'exploitation d'amplitude et de vitesse qui comporte des moyens pour produire un signal de sortie du dispositif d'exploitation d'amplitude et de vitesse correspondant à l'une des valeurs (a) d'amplitude maximale,

- les analyseurs (FFTA/FFTB) de Fourier des deux systèmes (A, B) de traitement étant raccordés par l'intermédiaire d'une matrice (SCH) de connexion commandée par le dispositif (GAA) d'exploitation d'amplitude et de vitesse à un dispositif (GWA) d'analyse d'angle et de vitesse, ce qui fait que les valeurs (w) d'angle se trouvant à la sortie des analyseurs (FFTA/FFTB) de Fourier des deux systèmes (A, B) de traitement peuvent être envoyées au dispositif (GWA) d'analyse d'angle et de vitesse qui comporte des moyens pour produire un signal de sortie du dispositif (GWA) d'analyse d'angle et de vitesse correspondant à une différence d'angle de phase des deux valeurs (w) d'angle et

les sorties du dispositif (GAA) d'exploitation d'amplitude et de vitesse et du dispositif d'analyse d'angle et de vitesse sont raccordées à un corrélateur de vitesse, ce qui fait que les signaux de sortie du dispositif (GAA) d'exploitation d'amplitude et de vitesse et les signaux de sortie du dispositif (GWA) d'analyse d'angle et de vitesse peuvent être envoyés au corrélateur (GKOR) de vitesse qui comporte des moyens pour combiner la différence d'angle de phase ayant la valeur (a) d'amplitude maximale à un signal de sortie du corrélateur (GKOR) de vitesse, le signal de sortie du corrélateur (GKOR) de vitesse indiquant la valeur (GSW) de vitesse du véhicule (FZ) mesuré.

**FIG 1**

FIG 2

FIG 3

# FIG 4

EP 0 730 166 B1

FIG 5